# EUROPEAN PATENT SPECIFICATION

(11) **EP 0 709 698 B1**
(45) Date of publication and mention of the grant of the patent: **20.10.2004**
(21) Application number: 94117127.4
(22) Date of filing: 28.10.1994
(51) Int. Cl.: G02B 6/04, G02B 6/255, A61C 19/00, A61N 5/00

(54) **Dental fiber optic light guide**
Dentaler faseroptischer Wellenleiter
Guide d'onde à fibre optique dentaire

(43) Date of publication of application: 01.05.1996
(73) Proprietor: Kerr Corporation, Orange, CA 92667 (US)
(72) Inventor: Friedman, Joshua, Dr., Danbury, CT 06810 (US)
(74) Representative: Kinzebach, Werner, Dr.

(56) References cited:
- EP-A- 0 191 500
- EP-A- 0 240 007
- DE-U- 8 701 070
- GB-A- 2 023 874
- US-A- 5 290 169

## Description

This invention relates to a fiber optic light guide and light-curing unit for producing a convergent beam of concentrated high-intensity light for curing a photocurable dental composition.

Photocurable materials are commonly used in dentistry as sealants, adhesives, and as filler material for filling dental cavities. To cure the photocurable material, it is exposed to radiant energy in a preselected spectral range, typically in either the long-wave ultraviolet or blue visible spectrum, tailored to the composition of the photocurable material. A light-curing unit containing a reflector lamp is used to irradiate the photocurable material by directing light from the reflector lamp through a light guide positioned with its distal end adjacent to the photocurable material to be cured. The light guide functions to channel the light to the material at the site of the dental restoration.

The physics of the transmission of light through a light conductor is well known, and is not unique to the field of dentistry. Any conventional text on optics will provide the fundamentals to compute the critical angle and the numerical aperture for maximum transmission of light through a conductive medium of known geometry, composition, and refractive index. It is the result of practical factors, such as limited accessibility, maneuverability, and size, that complicates the design of a dental light guide and light-curing unit. For example, to provide maximum accessibility and maneuverability within the oral cavity of a patient, the dental practitioner requires the light guide to have a curved end section. Substantial emphasis has been given to the design of a light guide to maximize the transmission of light from a reflector lamp of given dimensions operating at a given voltage rating under the constraints imposed by the dental practitioner and practical considerations of length and diameter.

The conventional light guide is a solid conductor of either glass or plastic, or is composed of a fiber optic conductor consisting of multiple strands of glass fiber held together as a flexible bundle or fused into a solid rod of individual fibers.

From EP-A-0 240 007 a light-curing unit comprising the features of the preamble of present claim 1 is known. GB-A-2 023 874 discloses an optical coupler for transmitting an optical signal from a single transmitting optical fiber to two tapered receiving optical fibers. From US-A-4,932,747 a device for homogenizing the intensity of a laser by tapering a plurality of optical fibers to a single fused end is known. GB-A-2 228 097 describes an optical coupler having tapered optical fibers for precisely aligning optical fibers in facing bundles.

The present invention provides for a light guide as defined in claim 1 and a use as defined in claim 7.

The light guide of the present invention is a fiber optic conductor having an elongated, conical, tapered section and a curved section which generates a convergent beam of high-intensity light at the distal end of the curved section, with minimal loss of light through the light guide.

The light guide of the present invention comprises:
a multiplicity of fiber optic strands bundled together to form a solid conductor of fixed geometry, having an elongated, conical-shaped section over a substantial portion of its length, and a curved section extending distally from the conical section, wherein each fiber optic strand is composed of a tapered core having a predetermined refractive index, and a cladded coating having a refractive index lower than the refractive index of said core, with each fiber optic strand having a complementary tapered geometry, with a taper angle substantially equivalent to the taper angle of each other fiber optic strand, such that the cumulative taper of all of said fiber optic strands form an optical taper for said conductor, having a taper angle proportional to the number of tapered strands in said bundle multiplied by the taper angle of said fiber optic strands.

Other objects and advantages of the present invention will become apparent from the following detailed description when read in conjunction with the accompanying drawings of which:
Figure 1 is a schematic of the light-curing unit of the present invention, including a lamp assembly and a light guide;
Figure 2 is a diagrammatic representation showing the effect of parallel light rays through a fiber optic conductor machined to form a conical taper;
Figure 3 is a diagrammatic representation of the fiber optic light guide of the present invention, which illustrates the principle of stacking fibers one upon the other to form an optical taper for the bundled conductor, with a taper angle proportional to the number of fibers and the taper angle of each fiber;
Figure 4 is a cross-section of the fiber optic conductor of Figure 3, taken along the lines 4-4 of Figure 3;
Figure 4B is an enlarged cross-section of a fiber optic strand showing the taper angle ("T");

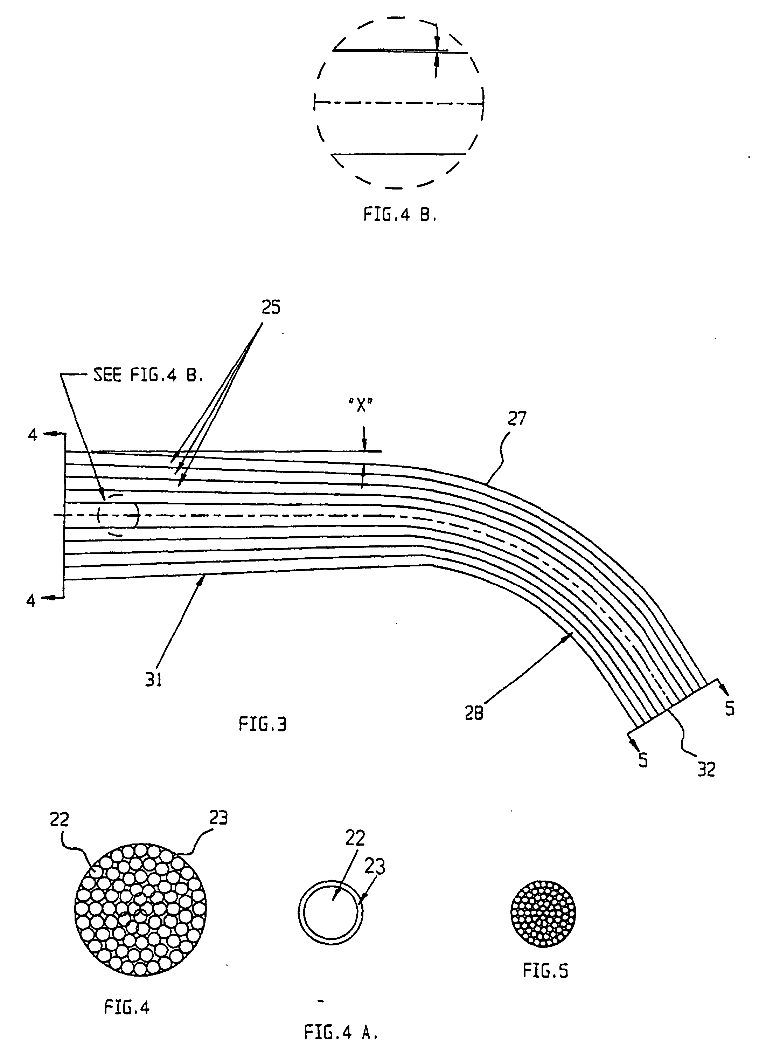

Figure 4 A is an enlarged section of a single fiber optic strand of Figure 4;
Figure 5 is a cross-section of the fiber optic conductor of Figure 3, taken along the lines 5-5 of Figure 3; and
Figure 6 is a diagrammatic representation showing the effect of parallel light rays through a fiber optic conductor.

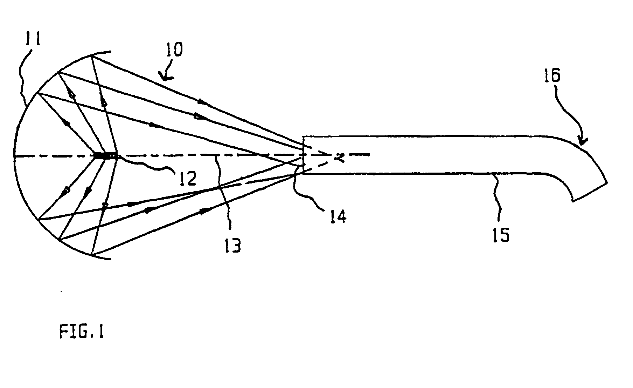

The source of light (10), shown schematically in Figure 1, comprises: a lamp filament (12) and a parabolic reflector (11). The lamp filament (12) is disposed on the optic axis (13) within the light source (10) to reflect cones of light off the reflector (11) toward a focal spot where a light guide (15) is positioned. The light guide (15) has a light-receiving surface (14) oriented perpendicular to the optic axis (13) to receive the incident cones of light. The cones of light are received at an acceptance angle, which for maximum efficiency, should be as large as possible. The mathematical sine of the maximum acceptance angle, known as the numerical aperture, is determined by the optical properties of the fiber optic material and its shape. The diameter of the light guide (15) at the light-receiving surface (14) is selected to maximize the efficient collection of light incident at the focal plane, coinciding with the light-receiving surface (14), and is generally in a range of between 8-13 mm. It is conventional for the light guide (15) to have a curved end section (16) to satisfy the requirements of maneuverability and accessibility of the light guide (15) for placement in the oral cavity of a dental patient. The curved section (16) has a radius of curvature which is chosen in proportion to the diameter of the curved end of the light guide (15), with an angle of curvature of from thirty degrees (30°) to sixty degrees (60°), for a diameter range between 0.7 and 1,5 cm.

It is known that if a light guide is tapered, the taper will reduce the angle of incidence for each reflection and cause a concentration of the light rays at the distal end of the light guide. This is true for any light conducting medium, and will apply to a dental light guide composed of glass, plastic, or a fiber optic rod containing multiple strands of fibers. The benefit to be realized must be balanced against the fact that for each reflection of light through a tapered conductor, the angle of incidence decreases by an amount equal to twice the taper angle. Thus, if the taper angle is large, the angle of incidence, even for a small number of reflections, will quickly become smaller than the critical angle, at which point light escapes from the light conductor in accordance with Snell's Law of Refraction.

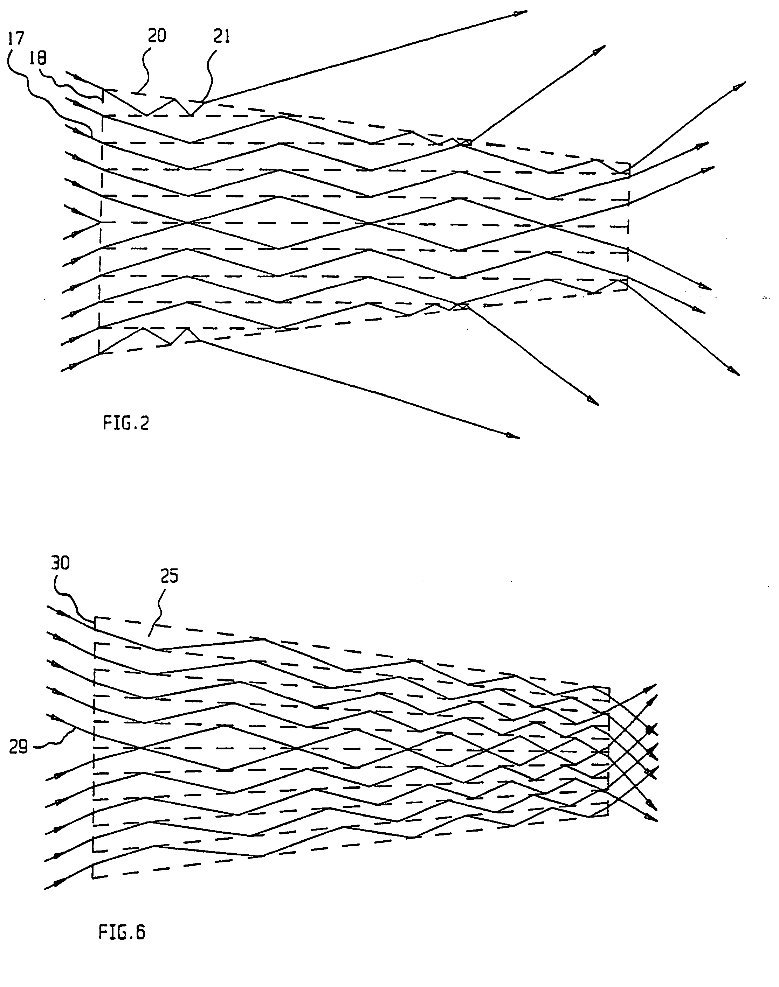

If the light conductor is a fiber optic conductor containing multiple fiber strands, and is mechanically contoured to form a conical geometry, the conical surface will permit light to escape through light scattering. This is evident from Figure 2 showing how parallel light rays (17) incident at the light-receiving surface (18) of a solid, fiber optic light guide (20), which has been machined down to form a conical surface geometry. The parallel light rays (17) scatter out of the light guide (20) along the ground taper (21). Thus, the concept of using a tapered body is not applicable to a mechanically contoured fiber optic rod. For this reason, the concept of a tapered wave guide has been applied, to date, only to a solid conductor composed of glass or plastic.

The fiber optic arrangement of the present invention is schematically illusirated in Figures 3 through 6. Each fiber strand (25) of the fiber optic conductor (27) is composed of a central core (22) surrounded by a cladding (23), as shown in Figures 4 and 4A, to form a composite. In accordance with the present invention, each strand (25) in the conductor (27) has a taper separate from the taper of each other strand (25). To form a conductor (27) having individual tapered strands, each of the fiber optic strands (25) may be separately tapered, bundled and fused together to form a solid conductor (27), or a length of solid fiber optic may be stretched to form an elongated stretched section of conical geometry wherein each strand is uniformly tapered over the stretched section. The tapered section may then be cut out from the stretched body so that each fiber optic strand (25) is uniformly tapered throughout its length. A curved end section (28) may thereafter be formed by heating and reshaping one end (28). This leaves an elongated, tapered, conical section (31) and a curved end section (28). However, the curved end section (28) is of a uniform or more uniform diameter. The diameter of the fiber optic conductor (27) at its distal end (32), as is shown in Figure 5, will be substantially reduced in size, based on the taper of the conductor (27) and its length. Although, the diameter of the conductor (27) at the distal end (32) will be substantially smaller than the diameter along the conical section (31), the number of fibers throughout the conductor (27) remains the same. In this arrangement, as shown in Figure 6, parallel light rays (29) incident at the light-receiving surface (30) are internally reflected through each fiber optic strand (25) without suffering any light scattering. Moreover, as shown in Figures 3 and 4B, the taper angle ("T") of each fiber optic strand, measured from the longitudinal axis extending through the center of the light guide, cumulatively creates an optical taper angle ("X") for the light guide in direct proportion to the number of tapered strands in the bundle, multiplied by the taper angle ("T") of each strand.

Thus, if there are, for example, 100 fibers laid side by side across the diameter of a bundle of fiber optic strands, and the optical taper angle for the entire bundle is, e.g., five degrees (5°), then each fiber would be tapered by approximately five/hundreds of a degree (0.05°). This means that each individual fiber has almost the same optical properties of a parallel fiber. Stated otherwise, with only a 0.05 degree taper, it would take a significant number of multiple, internal reflections before the internal angle of incidence is reduced within the individual fiber strand to the critical angle.

The cladding (23) formed around the central core (22) of each fiber optic strand (25), as shown in Figure 4 and 4A, is of itself conventional and is formed by doping the glass material to controllably reduce the refractive index of the cladding (23). It is necessary for the refractive index of the core (22) to be greater than the refractive index of the cladding. Preferably, the core should have a refractive index of 1.62 and the cladding a refractive index of 1.42.

## Claims

1. A light guide for transmitting light from a light source as a concentrated, high-intensity beam to a photocurable dental composition, said light guide having a light-receiving surface (14,30) transverse to the optic axis of the light source, with said light guide comprising a multiplicity of fiber optic strands (25) bundled together to form a solid conductor (27) having an elongated, conical-shaped section (31) and a curved section (28)
**characterized in that**
said curved section extends distally from said conical section (31), each fiber optic strand (25) in said conical section (31) having a tapered core (22) with substantially equal taper angle, said taper angle being less than one-tenth of a degree (0.1°), said tapered fiber strands (25) forming an optical taper for said conductor (27), a taper angle of said conductor (27) being proportional to the number of tapered strands (25) multiplied by the taper angle of said fiber optic strands, said taper angle of said conductor (27) being less than five degrees (5°), with said fiber optic strands (25) being arranged essentially parallel in said curved section (28) extending to a flat distal end face (32).

2. A light guide as defined in claim 1, wherein said core (22) has a predetermined refractive index and a cladded coating (23) having a refractive index lower than the refractive index of said core (22) is provided around said core.

3. A light guide as defined in one of claims 1 or 2, wherein each fiber optic strand in said curved section is tapered.

4. A light guide as defined in one of claims 1 to 3, wherein said curved section has an angle of curvature between thirty (30°) to sixty degrees (60°) for a diameter range between 0.7 to 1.5 cm.

5. A light guide as defined in one of claims 1 to 4, wherein said light guide has a diameter at said light-receiving surface between 8 mm and 13 mm.

6. A light-curing unit for producing a concentrated, high-intensity light, comprising a light source (10), a reflector (11) for said light source and a light guide as defined in one of claims 1 to 5 for transmitting reflected light of said light source to a photocurable dental composition.

7. The use of the light guide as defined in one of claims 1 - 5 for transmitting a concentrated, high-intensity light from a light source to a photocurable dental composition.

## Patentansprüche

1. Lichtleiter zur Übertragung von Licht von einer Lichtquelle in Form eines konzentrierten, hochintensiven Strahls auf eine lichthärtende Dentalzusammensetzung, wobei der Lichtleiter eine quer zur optischen Achse der Lichtquelle verlaufende lichtempfangende Fläche (14, 30) aufweist, wobei der Lichtleiter zahlreiche faseroptische Adern (25) aufweist, die zu einem festen Leiter (27) gebündelt sind, der einen gestreckten, konisch geformten Abschnitt (31) und einen gekrümmten Abschnitt (28) aufweist,
**dadurch gekennzeichnet, dass**
der gekrümmte Abschnitt distal von dem konischen Abschnitt (31) verläuft, wobei jede faseroptische Ader (25) in dem konischen Abschnitt (31) einen sich verjüngenden Kern (22) mit im Wesentlichen gleichem Verjüngungswinkel aufweist, wobei der Verjüngungswinkel weniger als ein Zehntel Grad (0,1°) beträgt und die sich verjüngenden Adern (25) einen optischen Konus für den Leiter (27) bilden, wobei der Verjüngungswinkel des Leiters (27) proportional zu der Anzahl der sich verjüngenden Adern (25) multipliziert mit dem Verjüngungswinkel der faseroptischen Adern ist, wobei der Verjüngungswinkel des Leiters (27) weniger als 5 Grad (5°) beträgt, wobei die faseroptischen Adern (25) in dem sich zu der flachen distalen Endfläche (32) erstreckenden gekrümmten Abschnitt (28) im Wesentlichen parallel angeordnet sind.

2. Lichtleiter gemäß Anspruch 1, wobei der Kern (22) einen bestimmten Brechungsindex aufweist und eine plattierte Beschichtung (23) mit einem niedrigeren Brechungsindex als dem Brechungsindex des Kerns (22) um den Kern herum vorgesehen ist.

3. Lichtleiter gemäß einem der Ansprüche 1 oder 2, wobei jede faseroptische Ader in dem gekrümmten Abschnitt verjüngt ausgebildet ist.

4. Lichtleiter gemäß einem der Ansprüche 1 bis 3, wobei der gekrümmte Abschnitt einen Krümmungswinkel zwischen 30 (30°) und 60 Grad (60°) in einem Durchmesserbereich zwischen 0,7 bis 1,5 cm aufweist.

5. Lichtleiter gemäß einem der Ansprüche 1 bis 4, wobei der Lichtleiter an der lichtempfangenden Fläche einen Durchmesser zwischen 8 mm und 13 mm aufweist.

6. Lichthärtendes Gerät zur Erzeugung eines konzentrierten, hochintensiven Lichts mit einer Lichtquelle (10), einem Reflektor (11) für die Lichtquelle und einem Lichtleiter gemäß einem der Ansprüche 1 bis 5 zur Übertragung von reflektiertem Licht der Lichtquelle auf eine lichthärtende Dentalzusammensetzung.

7. Verwendung der Lichtquelle gemäß einem der Ansprüche 1 bis 5 zur Übertragung von konzentriertem, hochintensivem Licht von einer Lichtquelle auf eine lichthärtende Dentalzusammensetzung.

## Revendications

1. Guide de lumière pour transmettre la lumière à partir d'une source de lumière, sous la forme d'un faisceau concentré à haute intensité, vers une composition dentaire photodurcissable, ledit guide de lumière possédant une surface de réception de la lumière (14, 30) transversale à l'axe optique de la source de lumière, ledit guide de lumière comprenant une multitude de brins de fibre optique (25) regroupés ensemble pour former un conducteur solide (27) présentant une section de forme conique et allongée (31) et une section incurvée (28)
**caractérisé en ce que**
ladite section incurvée s'étend de façon distale depuis ladite section conique (31), chaque brin de fibre optique (25) dans ladite section conique (31) possédant un coeur conique (22) avec un angle de conicité sensiblement égal, ledit angle de conicité étant inférieur à un dixième de degré (0,1°), lesdits brins de fibre coniques (25) formant un cône optique pour ledit conducteur (27), un angle de conicité dudit conducteur (27) étant proportionnel au nombre de brins coniques (25) multiplié par l'angle de conicité desdits brins de fibre optique, ledit angle de conicité dudit conducteur (27) étant inférieur à cinq degrés (5°), lesdits brins de fibre optique (25) étant agencés de façon essentiellement parallèle dans ladite section incurvée (28) s'étendant jusqu'à une face d'extrémité distale plate (32).

2. Guide de lumière selon la revendication 1, dans lequel ledit coeur (22) présente un indice de réfraction prédéterminé et une gaine (23) présentant un indice de réfraction inférieur à l'indice de réfraction dudit coeur (22) est disposée autour dudit coeur.

3. Guide de lumière selon la revendication 1 ou la revendication 2, dans lequel chaque brin de fibre optique, dans ladite section incurvée, est conique.

4. Guide de lumière selon l'une quelconque des revendications 1 à 3, dans lequel ladite section incurvée présente un angle de courbure compris entre trente (30°) et soixante degrés (60°) pour une gamme de diamètres allant de 0,7 à 1,5 cm.

5. Guide de lumière selon l'une quelconque des revendications 1 à 4, dans lequel ledit guide de lumière présente un diamètre au niveau de ladite surface de réception de la lumière compris entre 8 mm et 13 mm.

6. Unité de durcissement à la lumière pour produire une lumière concentrée à haute intensité, comprenant une source de lumière (10), un réflecteur (11) pour ladite source de lumière et un guide de lumière selon l'une quelconque des revendications 1 à 5 pour transmettre la lumière réfléchie de ladite source de lumière vers une composition dentaire photodurcissable.

7. Utilisation du guide de lumière selon l'une quelconque des revendications 1 à 5, pour transmettre une lumière concentrée à haute intensité à partir d'une source de lumière vers une composition dentaire photodurcissable.
